# EUROPEAN PATENT APPLICATION

(11) **EP 2 474 593 A1**
(43) Date of publication of application: **11.07.2012**
(21) Application number: 10811701.1
(22) Date of filing: 12.08.2010
(51) Int. Cl.: C10G 2/00

(54) **SLURRY PREPARATION METHOD, SLURRY PREPARATION APPARATUS, HYDROCARBON SYNTHESIS REACTION APPARATUS, AND HYDROCARBON SYNTHESIS REACTION SYSTEM**

(30) Priority: 31.08.2009 JP 2009200345
(71) Applicant: Japan Oil, Gas and Metals National Corporation, Minato-ku, Tokyo 105-0001 (JP); INPEX Corporation, Tokyo 107-6332 (JP); JX Nippon Oil & Energy Corporation, Chiyoda-ku Tokyo 100-8162 (JP); Japan Petroleum Exploration Co., Ltd., Tokyo 100-0005 (JP); Cosmo Oil Co., Ltd., Tokyo 105-8528 (JP); Nippon Steel Engineering Co., Ltd, Tokyo 141-8604 (JP)
(72) Inventor: ONISHI, Yasuhiro, Tokyo 141-8604 (JP); SHINGU, Masaki, Tokyo 100-8162 (JP); TANAKA, Yuichi, Yokohama-shi Kanagawa 231-0815 (JP)
(74) Representative: Vossius & Partner
(86) International application number: PCT/JP2010/063698
(87) International publication number: WO 2011/024651

(57) **Abstract**

Provided is a preparation method of a catalyst slurry used for synthesizing hydrocarbons by contact with a synthesis gas which includes carbon monoxide gas and hydrogen gas as main components. The method includes the step of preparing the catalyst slurry having solid catalyst particles suspended in a liquid medium, wherein adopting a petroleum solvent which is a liquid at normal temperature and normal pressure as the liquid medium.

## Description

### Technical Field

The present invention relates to a slurry preparation method, a slurry preparation device, a hydrocarbon synthesis reaction apparatus, and a hydrocarbon synthesis reaction system.
Priority is claimed on Japanese Patent Application No. 2009-200345 filed on August 31, 2009, the contents of which are incorporated herein by reference.

### Background Art

In recent years, the GTL (Gas To Liquids: liquid fuel synthesis) technique has been developed as one of the methods for synthesizing liquid fuels from natural gas. In the GTL technique, natural gas is reformed to produce a synthesis gas which includes carbon monoxide gas (CO) and hydrogen gas (H₂) as main components. With the generated synthesis gas as a source gas, hydrocarbons are synthesized by the Fischer-Tropsch synthesis reaction (hereinafter referred to as "FT synthesis reaction") with a catalyst. Liquid-fuel products, such as naphtha (crude gasoline), kerosene, gas oil, and wax, are produced by hydrogenating and fractionating the synthesized hydrocarbons.

Conventionally, a hydrocarbon synthesis reaction apparatus which has a reaction vessel and a synthesis gas introduction line, and synthesizes hydrocarbons by the FT synthesis reaction is known. The reaction vessel contains catalyst slurry having solid catalyst particles suspended in a liquid medium. The synthesis gas introduction line introduces the synthesis gas into the inside of the reaction vessel. According to this hydrocarbon synthesis reaction apparatus, hydrocarbons can be synthesized by bringing the catalyst slurry and the synthesis gas into contact with each other inside the reaction vessel.

In this type of hydrocarbon synthesis reaction apparatus, the catalyst slurry is not contained inside the reaction vessel, for example, at the time of the start of operation of the hydrocarbon synthesis reaction apparatus, or at the time of resumption of operation after the shutdown. In this case, it is necessary to supply the catalyst slurry to the inside of the reaction vessel after the catalyst slurry is prepared outside the reaction vessel. As a slurry preparation method of preparing the catalyst slurry outside the reaction vessel, for example, the method shown in the following PTL 1 is known. In PTL 1, a liquid including hydrocarbons produced by the FT synthesis reaction, and having hydrocarbon synthesis wax (hereinafter referred to as FT wax) which includes hydrocarbons produced by the FT synthesis reaction and is solid at normal temperature and normal pressure is used as a liquid medium of the catalyst slurry.

Here, a general slurry preparation method using the FT wax will be described. First, the FT wax held in a reservoir container is heated and melted. Next, the molten FT wax and the catalyst particles are supplied to a mixing vessel which prepares the catalyst slurry. Next, the liquid FT wax and the catalyst particles are mixed together within the mixing vessel to prepare the catalyst slurry. At this time, the FT wax is mixed while heating the mixing vessel so as not to solidify within the mixing vessel. According to this method, since the FT wax including hydrocarbons as a main substance is used as the liquid medium, deterioration of the catalyst is suppressed.

### Citation List

### Patent Literature

[PTL 1] Published Japanese Translation No. S/H 2005-517698 of the PCT International Publication

### Summary of Invention

### Technical Problem

However, the FT wax is a solid at normal temperature and normal pressure. Therefore, in order to use the FT wax as the liquid medium of the catalyst slurry, it is necessary to heat the FT wax to maintain the FT wax in a liquid phase state. Accordingly, preparation of the catalyst slurry not only takes substantial time, but also requires a lot of energy and a lot of costs. Moreover, in order to heat the FT wax in the process of the catalyst slurry preparation, it is necessary to provide a heating means in the reservoir container, the mixing vessel, or the like. If a heating means is provided, the apparatus is enlarged, and the costs required for manufacturing the apparatus increases. Preparation of the catalyst slurry outside the reaction vessel is mainly required at the time of the start of operation of the hydrocarbon synthesis reaction apparatus, and the resumption of operation after the shutdown. Therefore, the above heating means intermit there operation when the hydrocarbon synthesis reaction apparatus is operated. Accordingly, it is desired to suppress the manufacturing costs of the above heating means.
Additionally, the FT wax is hydrocarbons produced by the FT synthesis reaction, and the production output of the FT wax is smaller than the production output of so-called petroleum hydrocarbons refined from petroleum. Therefore, especially in case having no other hydrocarbon synthesis reaction apparatus of this kind when the operation of the hydrocarbon synthesis reaction apparatus is started, there is a problem that it is difficult to secure a required amount of FT wax as the liquid medium of the catalyst slurry to be supplied to the inside of the reaction vessel.

The object of the invention is to easily secure a required amount of liquid medium of a catalyst slurry, prepare the catalyst slurry in a short time without requiring heating, and prepare the catalyst slurry at a low energy and a low cost. The invention provides a slurry preparation method, a slurry preparation device, a hydrocarbon synthesis reaction apparatus, and a hydrocarbon synthesis reaction system.

### Solution to Problem

In order to solve the above-mentioned problem, the slurry preparation method according to the invention is a method of preparing catalyst slurry to be supplied to the inside of a reaction vessel which synthesizes hydrocarbons by contact with a synthesis gas which includes carbon monoxide gas and hydrogen gas as main components and the catalyst slurry having solid catalyst particles suspended in a liquid medium. Here, a petroleum solvent which is a liquid at normal temperature and normal pressure is used as the liquid medium.
In other words, the preparation method of the slurry of the invention is a preparation method of a catalyst slurry used for synthesizing hydrocarbons by contact with a synthesis gas which includes carbon monoxide gas and hydrogen gas as main components to synthesize hydrocarbons. The method includes the step of preparing the catalyst slurry having solid catalyst particles suspended in a liquid medium, wherein adopting a petroleum solvent which is a liquid at normal temperature and normal pressure as the liquid medium.

Here, normal temperature means an ordinary temperature without heating or cooling. Normal pressure means a pressure without particular depressurization or pressurization with respect to atmospheric pressure. Petroleum solvent means liquid hydrocarbons refined from petroleum.
In cases where a liquid petroleum solvent which is a liquid at normal temperature and normal pressure is used as the liquid medium of the catalyst slurry, there is no need to heat the liquid medium in order to maintain the liquid medium in a liquid phase state. Accordingly, the catalyst slurry can be prepared at low energy and low cost in a short time.
Additionally, the petroleum solvent is refined from petroleum, and can be produced without using hydrocarbons synthesized by the FT synthesis reaction. Therefore, even before the FT synthesis reaction is started, required amount of the petroleum solvent can be secured as the liquid medium for preparing catalyst slurry to be supplied into the reaction vessel.
Additionally, since using the petroleum solvent which is liquid hydrocarbons as the liquid medium, deterioration of the catalyst can be suppressed while preparing the catalyst slurry.

Additionally, the petroleum solvent may contain paraffin.

In the case where the chemical reaction inside the reaction vessel is the FT synthesis reaction, paraffin is mainly synthesized as hydrocarbons by this synthesis reaction. In this case, if the petroleum solvent contains paraffin, the hydrocarbons to be synthesized and the petroleum solvent show similar characteristics. Accordingly, deterioration of the catalyst included in the catalyst slurry caused by the liquid medium can be effectively suppressed.
Such a petroleum solvent includes, for example, liquid paraffin.

Additionally, the sulfur concentration of the petroleum solvent may be equal to or lower than 1 µg/L. The concentration may be preferably equal to or lower than 0.1 µg/L, and more preferably 0.02 µg/L.

When the concentration of the sulfur in the petroleum solvent is equal to or lower than 1 µg/L, the deterioration of the catalyst included in the catalyst slurry caused by the liquid medium can be reliably suppressed. When the concentration of the sulfur in the petroleum solvent is higher than 1 µg/L, there is a possibility that the catalyst included in the catalyst slurry may deteriorate due to the liquid medium.

The slurry preparation device according to the invention is a slurry preparation device directly used for implementation of the slurry preparation method according to the above invention. The slurry preparation device includes a mixing vessel which mixes the catalyst particles with the liquid medium to prepare the catalyst slurry, a catalyst supply part which supplies the catalyst particles to the mixing vessel, and a liquid medium supply part which supplies the liquid medium to the mixing vessel.

According to this slurry preparation device, the catalyst slurry can be prepared by mixing the catalyst particles and liquid medium supplied from the catalyst supply part and the liquid medium supply part, respectively, within the mixing vessel.
Additionally, while preparing the catalyst slurry, there is no need to heat the liquid medium in order to maintain the liquid medium in a liquid phase state. Therefore, there is no need to provide the mixing vessel and the liquid medium supply part with a heating means which maintains the liquid medium in a liquid phase state. Accordingly, downsizing and cost reduction of the slurry preparation device can be realized.

The hydrocarbon synthesis reaction apparatus according to the invention includes the slurry preparation device according to the above invention, the reaction vessel, and a slurry supply part which supplies the catalyst slurry prepared in the slurry preparation device to the inside of the reaction vessel.

According to this hydrocarbon synthesis reaction apparatus, the catalyst slurry prepared in the slurry preparation device can be supplied to the reaction vessel by the slurry supply part. Thereby, hydrocarbons can be synthesized by bringing the catalyst slurry and the synthesis gas into contact with each other inside the reaction vessel.
Additionally, since the slurry preparation device in which downsizing and cost reduction have been realized is included, downsizing and cost reduction of the hydrocarbon synthesis reaction apparatus can be realized.

The hydrocarbon synthesis reaction system according to the invention includes the hydrocarbon synthesis reaction apparatus according to the invention, a synthesis gas production unit which reforms a hydrocarbon feedstock to produce the synthesis gas, and supplies the synthesis gas to the reaction vessel, and a product upgrading unit which produces liquid fuel base stock from the hydrocarbons.

According to this invention, since the hydrocarbon synthesis reaction apparatus in which downsizing and cost reduction have been realized is included, downsizing and cost reduction of the hydrocarbon synthesis reaction system itself can be realized.

### Advantageous Effects of Invention

According to the invention, it is possible to easily secure a required amount of the liquid medium of the catalyst slurry, and prepare the catalyst slurry at low energy and low cost in a short time without requiring heating.

### Brief Description of Drawings

FIG. 1 is a schematic diagram showing the overall configuration of a liquid fuel synthesizing system according to one embodiment of the invention.
FIG. 2 is a schematic diagram showing the overall configuration of a slurry preparation device in an FT synthesis unit of the liquid fuel synthesizing system shown in FIG. 1.

### Description of Embodiments

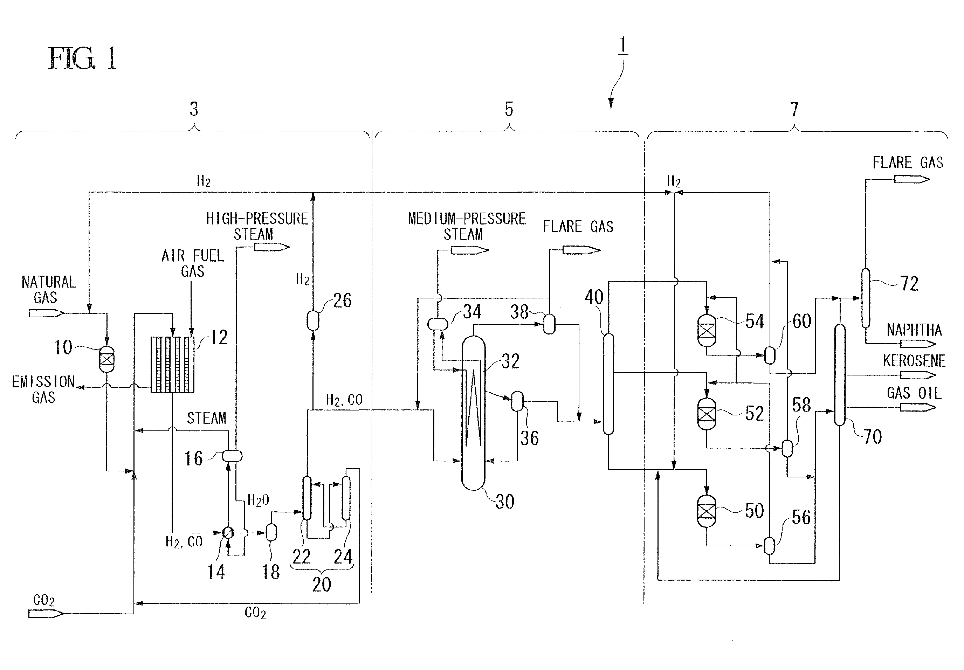

Hereinafter, a liquid fuel synthesizing system according to one embodiment of the invention will be described with reference to FIG. 1.
As shown in FIG. 1. the liquid fuel synthesizing system (hydrocarbon synthesis reaction system) 1 is a plant facility which carries out the GTL process which converts a hydrocarbon feedstock, such as natural gas, into liquid fuels. This liquid fuel synthesizing system 1 includes a synthesis gas production unit 3, an FT synthesis unit (hydrocarbon synthesis reaction apparatus) 5, and a product upgrading unit 7. The synthesis gas production unit 3 reforms natural gas, which is a hydrocarbon feedstock, to produce a synthesis gas which includes carbon monoxide gas and hydrogen gas. The FT synthesis unit 5 produces liquid hydrocarbons from the produced synthesis gas by the FT synthesis reaction. The product upgrading unit 7 hydrogenates and fractionates the liquid hydrocarbons produced by the FT synthesis reaction to produce base stocks of liquid fuel products (naphtha, kerosene, gas oil, wax, or the like) (liquid fuel base stocks). Hereinafter, components of these respective units will be described.

First, the synthesis gas production unit 3 will be described. The synthesis gas production unit 3 mainly includes, for example, a desulfurization reactor 10, a reformer 12, a waste heat boiler 14, gas-liquid separators 16 and 18, a CO₂ removal unit 20, and a hydrogen separator 26.
The desulfurization reactor 10 is composed of a hydrodesulfurizer, or the like, and removes sulfur components from natural gas which is a feedstock. The reformer 12 reforms the natural gas supplied from the desulfurization reactor 10, to produce a synthesis gas which includes carbon monoxide gas (CO) and hydrogen gas (H₂) as main components. The waste heat boiler 14 recovers waste heat of the synthesis gas produced in the reformer 12 to generate high-pressure steam. The gas-liquid separator 16 separates the water heated by the heat exchange with the synthesis gas in the waste heat boiler 14 into gas (high-pressure steam) and liquid. The gas-liquid separator 18 removes condensed fractions from the synthesis gas cooled in the waste heat boiler 14, and supplies a gas component to the CO₂ removal unit 20. The CO₂ removal unit 20 has an absorption tower 22 and a regeneration tower 24. The absorption tower 22 removes carbon dioxide gas from the synthesis gas supplied from the gas-liquid separator 18 by using an absorbent. The regeneration tower 24 regenerates the absorbent including the carbon dioxide gas by diffusing the carbon dioxide gas from the absorbent to regenerate the absorbent. The hydrogen separator 26 separates a portion of the hydrogen gas included in the synthesis gas, the carbon dioxide gas of which has been separated by the CO₂ removal unit 20. It is to be noted herein that the above CO₂ removal unit 20 may not be provided depending on circumstances.

Among them, the reformer 12 reforms natural gas by using carbon dioxide and steam to produce a high-temperature synthesis gas which includes carbon monoxide gas and hydrogen gas as main components, by a steam and carbon-dioxide-gas reforming method expressed by the following chemical reaction formulas (1) and (2). In addition, the reforming method in this reformer 12 is not limited to the example of the above steam and carbon-dioxide-gas reforming method. For example, a steam reforming method, a partial oxidation reforming method (POX) using oxygen, an autothermal reforming method (ATR) which is a combination of the partial oxidation method and the steam reforming method, a carbon-dioxide-gas reforming method, and the like can also be utilized.

CH₄ + H₂O → + 3H₂ (1)

CH₄ + CO₂ → 2CO + 2H₂ (2)

Additionally, the hydrogen separator 26 is provided on a branch line branching from a main line which connects the CO₂ removal unit 20 or gas-liquid separator 18 with the bubble column reactor 30. This hydrogen separator 26 can be composed of, for example, a hydrogen PSA (Pressure Swing Adsorption) device which performs adsorption and desorption of hydrogen gas by using a pressure difference. This hydrogen PSA device has adsorbents (zeolitic adsorbent, activated carbon, alumina, silica gel, or the like) within a plurality of adsorption towers (not shown) which are arranged in parallel. By sequentially repeating processes including pressurizing, adsorption, desorption (depressurization), and purging of hydrogen gas which including impurity gases in each of the adsorption towers, high-purity (for example, about 99.999%) hydrogen gas separated from the synthesis gas can be continuously supplied.

In addition, the hydrogen gas separating method in the hydrogen separator 26 is not limited to the example of the pressure swing adsorption method as in the above hydrogen PSA device. For example, there may be a hydrogen storing alloy adsorption method, a membrane separation method, or a combination thereof.

The hydrogen storing alloy method is, for example, a technique of separating hydrogen gas using a hydrogen storing alloy (TiFe, LaNi₅ TiFe_{0.7 to 0.9}, Mn_{0.3 to 0.1}, TiMn_{1.5}, or the like) having a property which adsorbs or emits hydrogen gas by being cooled or heated. By providing a plurality of adsorption towers in which a hydrogen storing alloy is stored, and alternately repeating, in each of the adsorption towers, adsorption of hydrogen gas by cooling of the hydrogen storing alloy and emission of hydrogen gas by heating of the hydrogen storing alloy, hydrogen gas in the synthesis gas can be separated and recovered.

The membrane separation method is a technique of separating hydrogen gas having excellent membrane permeability out of a mixed gas, using a membrane made of a polymeric material, such as aromatic polyimide. Since this membrane separation method is not accompanied with a phase change, less energy for running is required, and its running cost is low. Additionally, since the structure of a membrane separation device is simple and compact, low equipment costs are required and the required installation area is also smaller. Additionally, since there is no driving device in a separation membrane, and the stable running range is wide, there is an advantage that maintenance and management are easy.

The main line which connects the CO₂ removal unit 20 or the gas-liquid separator 18 with the bubble column reactor 30 functions as a synthesis gas introducing part which introduces the synthesis gas into the inside of the bubble column reactor 30. The synthesis gas production unit 3 supplies the synthesis gas to the FT synthesis unit 5 through the above main line.

Next, the FT synthesis unit 5 will be described. The FT synthesis unit 5 mainly includes, for example, the bubble column reactor 30, a gas-liquid separator 34, a separator 36, a gas-liquid separator 38, and a first fractionator 40.

The bubble column reactor 30 is an example of the reaction vessel which converts the synthesis gas into liquid hydrocarbons. That is, the bubble column reactor 30 is an example of the reaction vessel which synthesizes liquid hydrocarbons from the synthesis gas. The bubble column reactor 30 functions as a reactor for FT synthesis which synthesizes liquid hydrocarbons from the synthesis gas by the FT synthesis reaction (chemical reaction). The bubble column reactor 30 includes a bubble column slurry bed reactor. The bubble column slurry bed reactor has a column type vessel. A catalyst slurry having solid catalyst particles suspended in a liquid medium oil (liquid medium) is contained inside the column type vessel. The catalyst particles included in the catalyst slurry do not dissolve in the medium oil. The bubble column reactor 30 produces gaseous or liquid hydrocarbons from the synthesis gas by the FT synthesis. In detail, the synthesis gas which is a source gas supplied from the synthesis gas production unit 3 is supplied as bubbles from a spager of the bottom of the bubble column reactor 30, and passes through the inside of the catalyst slurry. This brings the catalyst slurry and the synthesis gas into contact with each other. By the action of the catalyst particles in the state of being suspended in the catalyst slurry, the hydrogen gas and the carbon monoxide gas react with each other as shown in the following chemical reaction formula (3).

2nH₂ + nCO → (̵CH₂)̵-ₙ +nH₂O (3)

Since this FT synthesis reaction is an exothermic reaction, the bubble column reactor 30 is of a heat-exchanger type which has the heat transfer line 32 disposed therein. For example, water (BFW: Boiler Feed Water) is supplied to the heat transfer line 32 as a coolant so that the reaction heat of the above FT synthesis reaction can be recovered as medium-pressure steam by the heat exchange between the catalyst slurry and water.

The gas-liquid separator 34 separates the water circulated and heated through the heat transfer line 32 disposed within the bubble column reactor 30 into steam (medium-pressure steam) and liquid. The separator 36, which is an example of a filtering means which separates the catalyst particles and the liquid hydrocarbons in the catalyst slurry, is arranged outside the bubble column reactor 30. The gas-liquid separator 38 is connected to the top of the bubble column reactor 30 to cool unreacted synthesis gas and hydrocarbons produced as gas. The first fractionator 40 distills the liquid hydrocarbons supplied via the separator 36 and the gas-liquid separator 38, and fractionally distills the liquid hydrocarbons into individual fractions according to boiling points. In addition, the separator 36 may be arranged within the bubble column reactor 30.

Next, the product upgrading unit 7 will be described. The product upgrading unit 7 includes, for example, a wax fraction hydrocracking reactor 50, a middle distillate hydrotreating reactor 52. a naphtha fraction hydrotreating reactor 54, gas-liquid separators 56, 58, and 60, a second fractionator 70, and a naphtha stabilizer 72. The wax fraction hydrocracking reactor 50 is connected to a lower part of the first fractionator 40. The middle distillate hydrotreating reactor 52 is connected to a middle part of the first fractionator 40. The naphtha fraction hydrotreating reactor 54 is connected to an upper part of the first fractionator 40. The gas-liquid separators 56, 58 and 60 are provided so as to correspond to the hydrogenation reactors 50, 52 and 54, respectively. The second fractionator 70 fractionally distills the liquid hydrocarbons separated by the gas-liquid separators 56 and 58 according to boiling points. The naphtha stabilizer 72 fractionates liquid hydrocarbons of a naphtha fraction supplied from the gas-liquid separator 60 and the second fractionator 70, to discharge components lighter than butane as a flare gas, and to recover components having a carbon number of five or more as a naphtha product.

Next, a process (GTL process) of producing liquid fuel base stocks from natural gas by the liquid fuel synthesizing system 1 configured as above will be described.

Natural gas (the main component of which is CH₄) as a hydrocarbon feedstock is supplied to the liquid fuel synthesizing system 1 from an external natural gas supply source (not shown), such as a natural gas field or a natural gas plant. The above synthesis gas production unit 3 reforms this natural gas to produce synthesis gas (mixed gas which includes carbon monoxide gas and hydrogen gas as main components).

As shown in FIG. 1, the above natural gas is supplied to the desulfurization reactor 10 along with the hydrogen gas separated by the hydrogen separator 26. The desulfurization reactor 10 desulfurizes the natural gas by converting sulfur components included in the natural gas to hydrogen sulfide using the hydrogen gas with a known hydrodesulfurization catalyst, and by absorbing the generated hydrogen sulfide with an absorber such as ZnO. By desulfurizing natural gas in advance in this way, the activity of catalysts used in the reformer 12, the bubble column reactor 30, or the like can be prevented from being reduced due to the sulfur components.

The natural gas (may also include carbon dioxide) desulfurized in this way is supplied to the reformer 12 after the carbon dioxide (CO₂) gas supplied from a carbon-dioxide supply source (not shown) and the steam generated in the waste heat boiler 14 are mixed. The reformer 12 reforms natural gas using carbon dioxide and steam to produce high-temperature synthesis gas which includes carbon monoxide gas and hydrogen gas as main components, by the above steam and carbon-dioxide-gas reforming method. At this time, the reformer 12 is supplied with, for example, fuel gas for a burner possessed by the reformer 12 and air, and reaction heat required for the above steam and carbon dioxide gas reforming reaction, which is an endothermic reaction, is provided by the heat of combustion of the fuel gas in the burner.

The high-temperature synthesis gas (for example, 900°C, 2.0 MPaG) produced in the reformer 12 in this way is supplied to the waste heat boiler 14, and is cooled (for example, 400°C) by the heat exchange with the water which circulates through the waste heat boiler 14, thereby recovering the waste heat. At this time, the water heated by the synthesis gas in the waste heat boiler 14 is supplied to the gas-liquid separator 16. From this gas-liquid separator 16, a gas component is supplied to the reformer 12 or other external devices as high-pressure steam (for example, 3.4 to 10.0 MPaG), and water as a liquid component is returned to the waste heat boiler 14.

Meanwhile, the synthesis gas cooled in the waste heat boiler 14 is supplied to the absorption tower 22 of the CO₂ removal unit 20, or the bubble column reactor 30, after condensed fractions are separated and removed in the gas-liquid separator 18. The absorption tower 22 removes the carbon dioxide gas from the synthesis gas by absorbing carbon dioxide gas from the synthesis gas into the reserved absorbent. The absorbent including the carbon dioxide gas within this absorption tower 22 is discharged to the regeneration tower 24. The absorbent including the carbon dioxide gas is heated with steam and subjected to a stripping treatment. The diffused carbon dioxide gas is discharged to the reformer 12 from the regeneration tower 24, and is reused for the above reforming reaction.

The synthesis gas produced in the synthesis gas production unit 3 in this way is supplied to the bubble column reactor 30 of the above FT synthesis unit 5. At this time, the composition ratio of the synthesis gas supplied to the bubble column reactor 30 is adjusted to a composition ratio suitable for the FT synthesis reaction (for example, H₂:CO=2:1 (molar ratio)). In addition, the pressure of the synthesis gas supplied to the bubble column reactor 30 is raised to a pressure suitable for the FT synthesis reaction (for example, about 3.6 MPaG) by a compressor (not shown) provided in the main line which connects the CO₂ removal unit 20 with the bubble column reactor 30.

Additionally, a portion of the synthesis gas, from which the carbon dioxide gas has been separated by the above CO₂ removal unit 20, is supplied also to the hydrogen separator 26. The hydrogen separator 26 separates the hydrogen gas contained in the synthesis gas, by the adsorption and desorption (hydrogen PSA) utilizing pressure difference as described above. This separated hydrogen gas is continuously supplied from a gas holder, or the like (not shown) via a compressor (not shown) to various hydrogen-utilizing reaction devices in the liquid fuel synthesizing system 1 (for example, the desulfurization reactor 10, the wax fraction hydrocracking reactor 50, the middle distillate hydrotreating reactor 52, the naphtha fraction hydrotreating reactor 54, or the like) which perform predetermined reactions by utilizing hydrogen gas.

Next, the above FT synthesis unit 5 produces liquid hydrocarbons from the synthesis gas produced in the above synthesis gas production unit 3 by the FT synthesis reaction.

Specifically, the synthesis gas from which the carbon dioxide gas has been separated in the above CO₂ removal unit 20 flows into the bubble column reactor 30 from the bottom, and flows up in the catalyst slurry contained within the bubble column reactor 30. At this time, within the bubble column reactor 30, the carbon monoxide gas and hydrogen gas which are contained in the synthesis gas react with each other by the FT synthesis reaction, thereby producing hydrocarbons. Additionally, by circulating water through the heat transfer line 32 in the bubble column reactor 30 at the time of this synthesis reaction, the reaction heat of the FT synthesis reaction is removed, and a portion of the water heated by this heat exchange is vaporized into steam. Among the steam and water, the water separated in the gas-liquid separator 34 is returned to the heat transfer line 32, and a gas component is supplied to external devices as medium-pressure steam (for example, 1.0 to 2.5 MPaG).

In this way, the liquid hydrocarbons synthesized in the bubble column reactor 30 are discharged as catalyst slurry from the middle part of the bubble column reactor 30, and are brought to the separator 36. The separator 36 separates the discharged catalyst slurry into catalyst particles (a solid component), and a liquid component containing a liquid hydrocarbon product. Some of the separated catalyst particles are returned to the bubble column reactor 30, and the liquid component is supplied to the first fractionator 40. From the top of the bubble column reactor 30, an unreacted synthesis gas, and a gas component of the synthesized hydrocarbons are discharged and introduced into the gas-liquid separator 38. The gas-liquid separator 38 cools these gases to separate some condensed liquid hydrocarbons to introduce them into the first fractionator 40. Meanwhile, most of the gas component separated in the gas-liquid separator 38, being mainly composed of the unreacted synthesis gas and hydrocarbons of C4 or lighter, is returned to the bottom of the bubble column reactor 30. And the unreacted synthesis gas contained in the gas component is reused for the FT synthesis reaction. In addition, the remaining gas component may be used as fuel gas of the reformer l2, or may be introduced into an external combustion facility (not shown), to be combusted therein, and then to be emitted to the atmosphere.

Next, the first fractionator 40 fractionally distill the liquid hydrocarbons (the carbon numbers of which are various) supplied from the bubble column reactor 30 via the separator 36 and the gas-liquid separator 38 as described above into a naphtha fraction (the boiling point of which is lower than about 150°C), a kerosene and gas oil fraction (a middle distillate (the boiling point of which is about 150 to 360°C) equivalent to kerosene and gas oil), and a wax fraction (the boiling point of which is higher than about 360°C). Liquid hydrocarbons (mainly C₂₁ or more) of the wax fraction discharged from the bottom of this first fractionator 40 are brought to the wax fraction hydrocracking reactor 50. Liquid hydrocarbons (mainly C₁₁ to C₂₀) of the middle distillate equivalent to kerosene and gas oil fraction discharged from the middle part of the first fractionator 40 are brought to the middle distillate hydrotreating reactor 52. Liquid hydrocarbons (mainly C₅ to C₁₀) of the naphtha fraction dischrged from the upper part of the first fractionator 40 are brought to the naphtha fraction hydrotreating reactor 54.

The wax fraction hydrocracking reactor 50 hydrocracks the liquid hydrocarbons of the wax fraction with a large carbon number (approximately C₂₁ or more), which has been discharged from the bottomof the first fractionator 40, by using the hydrogen gas supplied from the above hydrogen separator 26, to reduce the carbon number of the hydrocarbons to approximately 20 or less. In this hydrocracking reaction, hydrocarbons with a small carbon number (with a low molecular weight) are produced by cleaving C-C bonds of the hydrocarbons with a large carbon number using a catalyst and heat. A product containing the liquid hydrocarbons obtained by hydrocracking in this wax fraction hydrocracking reactor 50 is separated into gas and liquid in the gas-liquid separator 56. The separated liquid hydrocarbons are brought to the second fractionator 70, and the separated gas component (containing hydrogen gas) is brought to the middle distillate hydrotreating reactor 52 and the naphtha fraction hydrotreating reactor 54.

The middle distillate hydrotreating reactor 52 hydrotreats the liquid hydrocarbons of the middle distillate equivalent to kerosene and gas oil fraction having a middle carbon number (approximately C₁₁ to C₂₀), which have been discharged from the middle part of the first fractionator 40, using the hydrogen gas supplied from the hydrogen separator 26 via the wax fraction hydrocracking reactor 50. In this hydrotreating reaction, mainly in order to obtain mainly branched saturated hydrocarbons, the liquid hydrocarbons are isomerized, and hydrogen is added to unsaturated bonds of the above liquid hydrocarbons to saturate the liquid hydrocarbons. As a result, a product containing the hydrotreated liquid hydrocarbons is separated into gas and liquid in the gas-liquid separator 58. The separated liquid hydrocarbons are brought to the second fractionator 70, and the separated gas component (containing hydrogen gas) is reused for the above hydrogenation reactions.

The naphtha fraction hydrotreating reactor 54 hydrotreats liquid hydrocarbons of the naphtha fraction with a low carbon number (approximately C₁₀ or less), which have been discharged from the top of the first fractionator 40, using the hydrogen gas supplied from the hydrogen separator 26 via the wax fraction hydrocracking reactor 50. As a result, a product containing the hydrotreated liquid hydrocarbons is separated into gas and liquid in the gas-liquid separator 60. The separated liquid hydrocarbons are brought to the naphtha stabilizer 72, and the separated gas component (containing hydrogen gas) is reused for the above hydrogenation reactions.

Next, the second fractionator 70 fractionally distills the liquid hydrocarbons supplied from the wax fraction hydrocracking reactor 50 and the middle distillate hydrotreating reactor 52 as described above into a hydrocarbons with a carbon number of approximately 10 or less (the boiling point of which is lower than about 150°C), kerosene fraction (the boiling point of which is about 150 to 250°C), gas oil fraction (the boiling point of which is about 250 to 360°C), and an uncracked wax fraction (the boiling point of which is higher than about 360°C) from the wax fraction hydrocracking reactor 50. The uncracked wax fraction is obtained from the bottom of the second fractionator 70, and this is recycled to the upstream of the wax fraction hydrocracking reactor 50. Kerosene and gas oil fractions are discharged from the middle part of the second fractionator 70. Meanwhile, a hydrocarbon with a carbon number of approximately 10 or less are discharged from the top of the second fractionator 70, and are supplied to the naphtha stabilizer 72.

Moreover, the naphtha stabilizer 72 fractionally distills the hydrocarbons with a carbon number of approximately 10 or less which have been supplied from the above naphtha fraction hydrotreating reactor 54 and second fractionator 70 to obtain naphtha (C₅ to C₁₀) as a product. Accordingly, high-purity naphtha is discharged from a lower part of the naphtha stabilizer 72. Meanwhile, the gas other than products (flare gas), which contains hydrocarbons with a carbon number equal to or less than a predetermined number (equal to or less than C₄) as a main component, is discharged from the top of the naphtha stabilizer 72. This gas may be used as the fuel gas of the reformer 12, may be recovered as LPG (not shown), and may be introduced into an external fuel facility (not shown) to be combusted therein and to be then emitted to the atmosphere.

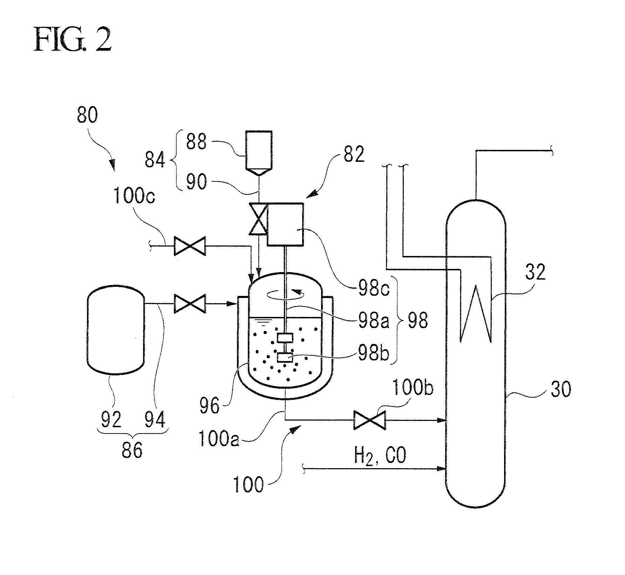

Next, a slurry preparation device 80 which is a portion of the FT synthesis unit 5 and which prepares the catalyst slurry will be described with reference to FIG. 2.
The slurry preparation device 80 includes a mixing vessel 82, a catalyst supply part 84, and a medium oil supply part 86. The mixing vessel 82 mixes the catalyst particles and the medium oil to prepare the catalyst slurry. The catalyst supply part 84 supplies the catalyst particles to the mixing vessel 82. The medium oil supply part 86 supplies the medium oil to the mixing vessel 82.

The catalyst supply part 84 includes a catalyst container 88 and a catalyst supply line 90. The catalyst container 88 contains the catalyst particles. The catalyst supply line 90 connects the catalyst container 88 with the mixing vessel 82. In the catalyst supply part 84, the catalyst particles contained in the catalyst container 88 are supplied to the mixing vessel 82 through the catalyst supply line 90. The supplied amount of the catalyst particles is adjusted by, for example, a control valve provided at the catalyst supply line 90.
The medium oil supply part 86 includes a medium oil container 92 and a medium oil supply line 94. The medium oil container 92 contains the medium oil. The medium oil supply line 94 connects the medium oil container 92 with the mixing vessel 82. In the medium oil supply part 86, the medium oil contained in the medium oil container 92 is supplied to the mixing vessel 82 through the medium oil supply line 94. The supplied amount of the medium oil is adjusted by, for example, a control valve provided at the medium supply line 94. In addition, in the present embodiment, a heating part which heats the medium oil contained inside the medium oil container is not provided in the medium oil container 92.

The mixing vessel 82 includes a vessel body 96 and an agitating part 98. The vessel body 96 contains the catalyst particles and medium oil supplied from the catalyst supply part 84 and the medium oil supply part 86. The agitating part 98 agitates and mixes the catalyst particles and medium oil contained in the vessel body 96.
In the illustrated example, the agitating part 98 includes a rotary shaft portion 98a, a blade portion 98b, and a driving portion 98c. The rotary shaft portion 98a is provided so as to extend downward from the top of the vessel body 96 in the direction of axis. The blade portion 98b is provided so as to protrude radially from the rotary shaft portion 98a about the rotary shaft portion 98a. The driving portion 98c rotates the rotary shaft portion 98a around the above axis. The agitating part 98 rotates the rotary shaft portion 98a by the driving portion 98c to rotate the blade portion 98b. This agitates and mixes the catalyst particles and medium oil contained in the vessel body 96. Additionally, in the present embodiment, a heating part which heats the medium oil supplied to the inside of the vessel body is not provided in the vessel body 96.

The FT synthesis unit 5 has a slurry supply part 100 which supplies the catalyst slurry prepared in the slurry preparation device 80 to the inside of the bubble column reactor 30.
The slurry supply part 100 includes a slurry supply line 100a, an on-off valve 1 00b, and a pressurizing gas supply part 100c. The slurry supply line 100a connects the vessel body 96 with the bubble column reactor 30. The on-off valve 100b opens and closes the slurry supply line 100a. The pressurizing gas supply part 100c supplies the pressurizing gas to the inside of the vessel body 96. The pressurizing gas pressurizes the inside of the vessel body 96. As the pressurizing gas, it is preferable to adopt a gas which does not affect deterioration of the catalyst. Such a pressurizing gas includes, for example, nitrogen gas or the like.
The slurry supply part 100 brings the on-off valve 100b into an opened state, and supplies the pressurizing gas to the inside of the vessel body 96 by the pressurizing gas supply part 100c. Thereby, the slurry supply part 100 supplies the catalyst slurry inside the vessel body 96 to the bubble column reactor 30.

Next, a method of preparing catalyst slurry using the preparing device 80 will be described. Here, in the present embodiment, a petroleum solvent which is a liquid at normal temperature and normal pressure is used as the medium oil. This petroleum solvent may contain paraffin. The sulfur concentration in this petroleum solvent is equal to or less than 1 µg/L, preferably equal to or lower than 0.1 µg/L, and more preferably equal to or lower than 0.02 µg/L.

In addition, norman temperature means an ordinary temperature (for example, 15°C to 25°C) at which heating, cooling, or the like is not performed. Normal pressure means a pressure at which neither depressurization nor pressurization is specially performed with respect to atmospheric pressure (for example, atmospheric pressure). The petroleum solvent means liquid hydrocarbons refined not from coal or natural gas but from so-called crude oil. Such a petroleum solvent includes, for example, liquid paraffins (for example, Cosmo White P (made by Cosmo Oil Lubricants Co., Ltd.) or the like) and petroleum solvents (for example, AF Solvent No. 6 (made by Nippon Oil Corporation) or the like). In addition, the petroleum solvent may contain paraffin as a main component (for example, the concentration of paraffin in a petroleum solvent is 70% by mass or higher and 100% by mass or lower).

First, the catalyst particles and the medium oil are supplied into the vessel body 96 by the catalyst supply part 84 and the medium oil supply part 86, respectively. Then, the catalyst particles and the medium oil are agitated and mixed within the vessel body 96 by the agitating part 98 to prepare catalyst slurry. The prepared catalyst slurry is supplied to the bubble column reactor 30 by the slurry supply part 100 as necessary.

A slurry preparation method according to the present embodiment uses a petroleum solvent which is a liquid at normal temperature and normal pressure as the medium oil of the catalyst slurry. Therefore, there is no need to heat the medium oil in order to maintain the medium oil in a liquid phase state, and the catalyst slurry can be prepared in a short time, at low energy and low cost.
Additionally, the petroleum solvent refined from crude oil, and the petroleum solvent can be produced without using the hydrocarbons synthesized by the FT synthesis reaction. Therefore, even before the FT synthesis reaction is started, this petroleum solvent can be used as the medium oil of the catalyst slurry to be supplied to the inside of the bubble column reactor 30. Accordingly, the required quantity of petroleum solvent as the medium oil for preparing the catalyst slurry can be easily secured.

Additionally, since the petroleum solvent which is liquid hydrocarbons is used as the medium oil, deterioration of the catalyst while preparing the catalyst slurry can be suppressed.
Moreover, in the present embodiment, the petroleum solvent contains paraffin. Additionally, the chemical reaction inside the bubble column reactor 30 is the FT synthesis reaction, and paraffin is mainly synthesized as hydrocarbons by this synthesis reaction. In this case, the hydrocarbons to be synthesized and the petroleum solvent show similar characteristics. Accordingly, it is possible to effectively keep the catalyst included in the catalyst slurry from deteriorating due to the medium oil.
Furthermore, in the case where the concentration of the sulfur in the petroleum solvent has become equal to or lower than 1 µg/L, the deterioration of the catalyst included in the catalyst slurry caused by the medium oil can be more reliably suppressed. In addition, if the concentration of the sulfur in the petroleum solvent is higher than 1 µg/L, there is a possibility that the catalyst included in the catalyst slurry may deteriorate due to the medium oil.

Additionally, according to the slurry preparation device 80 related to the present embodiment, when the catalyst slurry is prepared, the medium oil is maintained in a liquid phase state even if the medium oil is not heated. Therefore, the heater for maintaining the medium oil in a liquid phase state is not required to be provided in the mixing vessel 82 and the medium oil supply part 86. Accordingly, the slurry preparation device 80 can be miniaturized, and costs can be reduced.
Additionally, the FT synthesis unit 5 according to the present embodiment includes the slurry preparation device 80 in which downsizing and cost reduction are realized. Accordingly, downsizing and cost reduction of the FT synthesis unit 5 can be realized.
Additionally, the liquid fuel synthesizing system 1 according to the present embodiment includes the FT synthesis unit 5 in which downsizing and cost reduction are realized. Accordingly, downsizing and cost reduction of the liquid fuel synthesizing system 1 can be realized.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the present invention is not to be considered as being limited by the foregoing description, and is only limited by the scope of the appended claims.

For example, in the above embodiment, natural gas is used as a hydrocarbon feedstock to be supplied to the liquid fuel synthesizing system 1. However, the invention is not limited to such an example. For example, other hydrocarbon feedstock, such as asphalt and residual oil, may be used.

Further, in the above embodiments, liquid hydrocarbons are synthesized by the FT synthesis reaction as the synthesis reaction in the bubble column reactor 30. However, the invention is not limited to this example. Specifically, the invention can also be applied to, for example, oxo synthesis (hydroformylation reaction) "R-CH=CH₂ + CO + H₂ → R-CH₂CH₂CHO", methanol synthesis "CO + 2H₂ → CH₃OH", dimethylether (DME) synthesis "3CO + 3H₂ → CH₃OCH₃ + CO₂", or the like, as the synthesis reaction in the bubble column reactor.

Additionally, the mixing vessel 82 is not limited to that shown in the above embodiments, and just has to be one which mixes the catalyst particles with the medium oil to prepare the catalyst slurry. Additionally, the slurry supply part 100 is also not limited to that shown in the above embodiments, and just has to be one which supplies the catalyst slurry prepared in the slurry preparation device 80 to the inside of the bubble column reactor 30.

### Industrial Applicability

Provided is a preparation method of a catalyst slurry used for synthesizing hydrocarbons by contact with a synthesis gas which includes carbon monoxide gas and hydrogen gas as main components. The preparation method includes the step of supplying a petroleum solvent which is a liquid at normal temperature and normal pressure to the catalyst slurry having solid catalyst particles suspended in a liquid medium.
Thereby, a required amount of the liquid medium of the catalyst slurry can be easily secured. Additionally, the catalyst slurry can be prepared in a short time without heating. Additionally, the catalyst slurry can be prepared at low energy and low cost.

### Reference Signs List

1: LIQUID FUEL SYNTHESIZING SYSTEM (HYDROCARBON SYNTHESIS REACTION SYSTEM)
3: SYNTHESIS GAS PRODUCTION UNIT
5: FT SYNTHESIS UNIT (HYDROCARBON SYNTHESIS REACTION APPARATUS)
7: PRODUCT UPGRADING UNIT
30: BUBBLE COLUMN REACTOR (REACTION VESSEL)
80: SLURRY PREPARATION DEVICE
82: MIXING VESSEL
84: CATALYST SUPPLY PART
86: MEDIUM OIL SUPPLY PART
100: SLURRY SUPPLY PART

## Claims

1. A preparation method of a catalyst slurry used for synthesizing hydrocarbons by contact with a synthesis gas which includes carbon monoxide gas and hydrogen gas as main components comprising the step of:
preparing the catalyst slurry having solid catalyst particles suspended in a liquid medium, wherein
adopting a petroleum solvent which is a liquid at normal temperature and normal pressure as the liquid medium.

2. The slurry preparation method according to Claim 1, wherein the petroleum solvent contains paraffin.

3. The slurry preparation method according to Claim 1 or 2, wherein the sulfur concentration of the petroleum solvent is equal to or lower than 1 µg/L.

4. A slurry preparation device directly used for implementation of the slurry preparation method according to any one of Claims 1 to 3, the slurry preparation device comprising:
a mixing vessel which mixes the catalyst particles with the liquid medium to prepare the catalyst slurry;
a catalyst supply part which supplies the catalyst particles to the mixing vessel; and
a liquid medium supply part which supplies the liquid medium to the mixing vessel.

5. A hydrocarbon synthesis reaction apparatus comprising:
the slurry preparation device according to Claim 4;
a reaction vessel which allows the synthesis gas and the catalyst slurry to contact each other therein; and
a slurry supply part which supplies the catalyst slurry prepared in the slurry preparation device to the inside of the reaction vessel.

6. A hydrocarbon synthesis reaction system comprising:
the hydrocarbon synthesis reaction apparatus according to Claim 5;
a synthesis gas production unit which reforms a hydrocarbon feedstock to produce the synthesis gas, and supplies the synthesis gas to the reaction vessel; and
a product upgrading unit which refines a liquid fuel base material from the hydrocarbons.
